# EUROPÄISCHE PATENTSCHRIFT

(11) **EP 2 376 321 B1**
(45) Veröffentlichungstag und Bekanntmachung des Hinweises auf die Patenterteilung: **19.03.2014**
(21) Anmeldenummer: 09764851.3
(22) Anmeldetag: 08.12.2009
(51) Int. Cl.: B62D 7/14, B62D 5/04, B62D 7/15, B60G 7/00

(54) **LENKVORRICHTUNG, INSBESONDERE FÜR EINE HINTERRADLENKUNG**
STEERING APPARATUS, IN PARTICULAR FOR A REAR-WHEEL STEERING SYSTEM
DISPOSITIF DE DIRECTION, EN PARTICULIER POUR UNE DIRECTION PAR LES ROUES ARRIERE

(30) Priorität: 09.12.2008 DE 102008054430; 27.08.2009 DE 102009039164
(43) Veröffentlichungstag der Anmeldung: 19.10.2011
(73) Patentinhaber: Continental Teves AG & Co. oHG, 60488 Frankfurt (DE)
(72) Erfinder: BESIER, Marco, 65307 Bad Schwalbach (DE); JUNGBECKER, Johann, 55576 Badenheim (DE); LINKENBACH, Steffen, 65760 Eschborn (DE); DUTOYA, Roland, F-31100 Toulouse (FR); THOMY, Pierre-Philippe, F-31660 Bessieres (FR); LAURE, Frederice, F-31170 Tournefeuille (FR)
(86) Internationale Anmeldenummer: PCT/EP2009/066628
(87) Internationale Veröffentlichungsnummer: WO 2010/066732

(56) Entgegenhaltungen:
- WO-A1-2006/117343
- WO-A1-2008/081665
- WO-A1-2008/114659
- DE-A1-102007 035 004

## Beschreibung

Die Erfindung betrifft eine Lenkvorrichtung zum Einstellen eines Radeinschlagswinkels eines Rades eines Kraftfahrzeugs, insbesondere eines Hinterrades, umfassend wenigstens ein Radführungsglied, über das ein Radträger des Rades mit einem Fahrzeugaufbau verbunden ist, wobei der Radträger um eine im Wesentlichen parallel zur Radebene verlaufende Drehachse schwenkbar ist und das Radführungsglied beabstandet von der Drehachse an dem Radträger angelenkt und mittels einer elektromechanischen Antriebseinheit in seiner Länge verstellbar ist, wobei die elektromechanische Antriebseinheit einerseits über eine Schubstange mit einem radträgerseitigen Gelenk zur Bildung eines Schwenklagers verbunden ist, über das eine Verbindung zum Radträger realisiert wird und andererseits mit einem fahrzeugaufbauseitigem Gelenk zur Bildung eines weiteren Schwenklagers verbunden ist, über das eine Verbindung zum Fahrzeugaufbau realisiert wird.

Aus der WO 2006/117343 A1 ist eine derartige Lenkvorrichtung bekannt. Die vorbekannte Lenkvorrichtung weist einen parallel zur Längsachse angeordneten Elektromotor auf.

Aus der EP 0 340 823 A1 ist eine Vorrichtung zur Regulierung der Armlänge einer Federung für Kraftfahrzeuge bekannt. Mit dieser Maßnahme werden die Hinterräder eines Kraftfahrzeuges gelenkt.

Es hat sich gezeigt, dass die Radaufhängungen für verschiedene Fahrzeuge in der Regel auch konstruktiv verschieden ausgeführt sind, sodass es bei den vorbekannten Vorrichtungen jeweils einer Veränderung bedarf um an die Bauraumverhältnisse einer anderen Radaufhängung angepasst zu werden.

Die EP 2 130 744 A1 offenbart ebenfalls eine Lenkvorrichtung zum Einstellen eines Radeinschlagwinkels der eingangs genannten Gattung. Bei der vorbekannten Lenkvorrichtung ist derselbe Aktuator für die rechte und die linke Seite des Radträgers vorgesehen. Um den unterschiedlichen Bauräumen Rechnung zu tragen, ist das Gehäuse mittig teilbar ausgebildet, sodass die Gehäusehälften gegeneinander verdrehbar sind und mit vier Bolzen, die durch vier Kupplungsflansche gesteckt werden, miteinander verbunden werden. Diese Anordnung verliert durch die Kupplungsflansche und die Verbindungsbolzen ein schlankes Design.

Es ist daher eine Aufgabe der vorliegenden Erfindung, eine Lenkvorrichtung der eingangs genannten Art zu schaffen, die in besonders einfacher Weise in die herkömmliche Radaufhängung eines nicht lenkbaren Fahrzeugrades integrierbar ist und dabei an die beschränkten Bauraumverhältnisse verschieden ausgeführter Radaufhängungen anpassbar ist.

Erfindungsgemäß wird diese Aufgabe durch eine Lenkvorrichtung mit den Merkmalen des Anspruchs 1 gelöst. Dabei ist vorgesehen, dass das fahrzeugaufbauseitige Gelenk gegenüber der Längsachse der elektromechanischen Antriebseinheit in beliebigen Winkelstellungen positionierbar und mittels eines Schraubrings in dieser Position feststellbar ist, sodass das Radführungsglied an die vorhandenen Bauraumverhältnisse adaptierbar ist.

Weitere vorteilhafte Ausgestaltungen ergeben sich aus den Unteransprüchen.

Eine weitere vorteilhafte Weiterbildung sieht vor, dass das radträgerseitigen Gelenk austauschbar ausgebildet ist und dass die geometrische Lage des radträgerseitigen Gelenks durch das Einsetzen eines Schubstangenadapters veränderbar ist, um das Radführungsglied an die vorhandenen Bauraumverhältnisse anzupassen. Dabei weist die elektromechanische Antriebseinheit einen Elektromotor auf, der koaxial zur Längsachse der elektromechanischen Antriebseinheit angeordnet ist.

Bei einer vorteilhaften Weiterbildung ist vorgesehen, dass der Elektromotor unter Zwischenschaltung eines Planetengetriebes einen Kugelgewindetrieb betätigt, der die Rotationsbewegung des Elektromotors in eine Translationsbewegung der Schubstange umsetzt und eine Verstellung der Länge des Radführungsglieds bewirkt.

Der Schubstangenadapter ist mittels eines Gewindes in die Gewindespindel des Kugelgewindetriebs eindrehbar.

Eine besonders vorteilhafte Weiterbildung des Erfindungsgegenstandes sieht vor, dass weder das Planetengetriebe noch der Kugelgewindetrieb selbsthemmend ausgebildet sind, wobei eine Blockiereinrichtung vorgesehen ist, die einen von einem Verriegelungsmagnet betätigten Magnetstößel mit einem Verriegelungsring in Eingriff bringt, der mit dem Kugelgewindetrieb verbunden ist, sodass eine Längenverstellung des Radführungsglieds unterbunden wird.

Eine weitere Ausgestaltung sieht vor, dass eine Steuereinheit benachbart zum Elektromotor im Gehäuse der elektromechanischen Antriebseinheit angeordnet ist.

Zur Ermittlung der Rotorlage weist der Elektromotor mindestens einen Sensor auf, der als axial am Elektromotor angebrachter Lagesensor oder als mit dem Rotor des Elektromotors verbundener Ringsensor ausgebildet ist.

Bei dem Radführungsglied handelt es sich um eine Spurstange und/oder einen Querlenker einer Einzelradaufhängung.

Eine weitere Ausgestaltung des Erfindungsgegenstandes sieht vor, dass die elektromechanische Antriebseinheit, das radträgerseitige Gelenk und das fahrzeugaufbauseitige Gelenk als selbstständig handhabbare Baugruppen ausgeführt sind.

Die Erfindung wird nachfolgend anhand eines Ausführungsbeispiels im Zusammenhang mit der beiliegenden Zeichnung näher erläutert. In der Zeichnung zeigen:
- Fig. 1: einen Hinterachsintegralträger nach dem Stand der Technik;
- Fig. 2: eine Schnittdarstellung des erfindungsgemäßen Radführungsglieds;
- Fig. 3a, b, c: dreidimensionale Darstellungen des erfindungsgemäßen Radführungsglieds mit drehbarem fahrzeugaufbauseitigem Gelenk und verschiedenen Schubstangenadaptern;
- Fig. 4a, b: ein Getriebe zur Umsetzung einer Rotationsbewegung in eine Translationsbewegung, das in dem erfindungsgemäßen Radführungsglied verwendet wird;
- Fig. 5a, b: eine Blockiereinrichtung, die bei Bedarf eine Längenverstellung des erfindungsgemäßen Radführungsglieds verhindert;
- Fig. 6a: bis d eine Verdrehsicherung zur Montage des Getriebes nach Fig. 4 im Gehäuse des Radführungsglieds und
- Fig. 7: eine schematische Schnittdarstellung des erfindungsgemäßen Radführungsglieds.

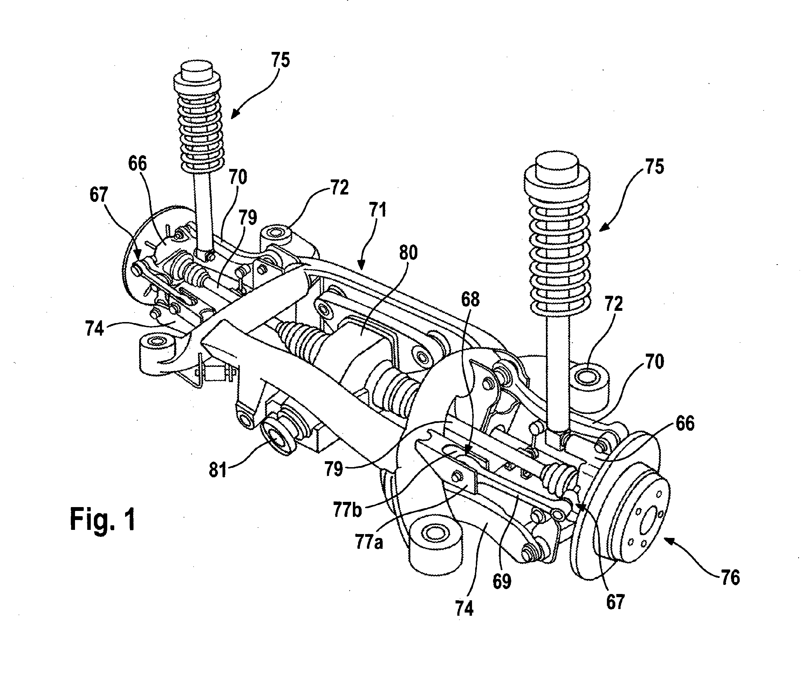

Figur 1 zeigt einen Hinterachsintegralträger für eine angetriebene Hinterachse eines Kraftfahrzeugs, wie er aus dem Stand der Technik an sich bekannt ist. Er weist einen Hilfsrahmen 71 auf, der an Befestigungspunkten 72 mit einer in Figur 1 nicht dargestellten Karosserie des Fahrzeugs verbunden wird. Radträger 66 sind über Radführungslenker 74 gelenkig mit dem Hilfsrahmen 71 verbunden. Ferner ist jeweils ein Federbein 75 zur Abstützung an der Karosserie fest an den Radträgern 66 montiert. In Figur 1 sind zudem an den Radträgern montierte Radlagerungen 76 dargestellt. Die an die Radträger 66 bzw. die Radlagerungen 76 montierbaren Hinterräder des Fahrzeugs werden jeweils durch eine Radantriebswelle 79 angetrieben. Die Radantriebswellen 79 sind dabei über ein Differentialgetriebe 80 miteinander verbunden, das einen in Fahrzeuglängsrichtung nach vorne gerichteten Flansch 81 zum Anflanschen einer durch den Fahrzeugmotor angetriebene Welle aufweist.

Zwischen dem Hilfsrahmen 71 und den Radträgern 66 befindet sich ferner jeweils eine Spurstange 69 mit fester Länge, die durch jeweils ein Schwenklager 67, 68 mit dem Hilfsrahmen 71 einerseits und dem Radträger 66 andererseits verbunden ist.

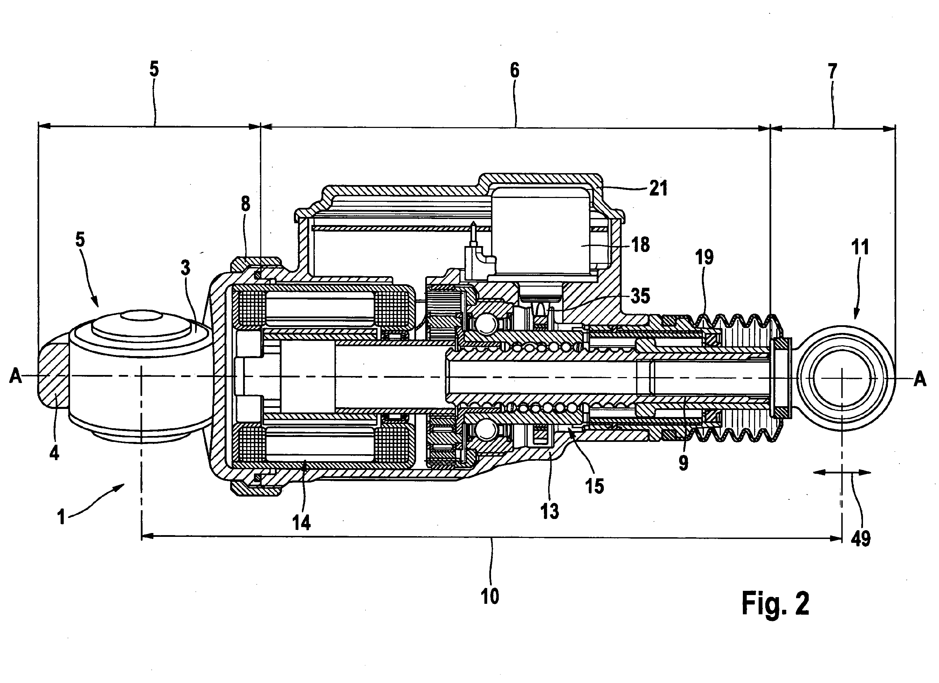

Bei der nachfolgend beschriebenen Lenkvorrichtung ist vorgesehen, dass ein längefestes Radführungsglied auf jeder Seite des Hinterachsintegralträgers durch ein Radführungsglied ersetzt wird, das in seiner Länge verstellbar ist. Dabei werden die Spurstangen 69 jeweils durch eine in Figur 2 dargestelltes Radführungsglied 1 ersetzt, das in seiner Länge veränderbar ist, wie nachfolgend noch näher erläutert wird. Alternativ kann auch ein Querlenker 70 einer Einzelradaufhängung durch das in Figur 2 dargestellte, längenverstellbare Radführungsglied 1 ersetzt werden.

Wie es in Fig. 2 dargestellt ist, weist das Radführungsglied 1 zur Befestigung an dem Hilfsrahmen 71 ein fahrzeugaufbauseitiges Gelenk 5 auf, das zusammen mit den Lagerseitenstegen 77a, 77b (Figur 1) des Hilfsrahmens 71 das Schwenklager 68 bildet. Über das radträgerseitige Gelenk 11, welches das Schwenklager 67 bildet, kann das Radführungsglied 1 an den Radträger 66 angelenkt werden.

Das Radführungsglied 1 enthält eine elektromechanische Antriebseinheit, mit dem über ein Getriebe eine Schubstange 9 bewegt wird, um den Radträger 66 um eine im Wesentlichen parallel zur Radebene verlaufende Drehachse zu verschwenken. An der Schubstange 9 ist dabei das radträgerseitige Gelenk 11 angeordnet, das am Schwenklager 67 angreift.

Durch die Längenänderung des Radführungsglieds 1 wird der Radeinschlagswinkel der an den Radträgern 66 montierten Hinterräder verändert. Bei der dargestellten Ausführungsform erfolgt insbesondere bei einer Verlängerung des Radführungsglieds eine Veränderung des Radeinschlagswinkels in Richtung Vorspur und bei einer Verkürzung eine Veränderung in Richtung Nachspur.

Eine Modifikation der übrigen Radführungslenker 74 ist in der Regel nicht erforderlich, da Radaufhängungen üblicherweise ein Verschwenken der Räder in Richtung Vor- und Nachspur zulassen. Ohne weitere Modifikationen lassen sich dabei insbesondere Radeinschlagswinkel realisieren, die im Bereich der Radeinschlagswinkel aufgrund von elastokinematischen Lenkbewegung liegen und für eine wirkungsvolle Beeinflussung der Fahrdynamik bereits ausreichend groß sind. Gleichfalls kann es jedoch auch vorgesehen sein, die Radaufhängung so zu modifizieren, dass größere Lenkeinschläge möglich sind.

Bedingt durch die beengten Einbauverhältnisse an den fahrzeugspezifischen Hinterachsintegralträgern ist es sehr schwierig, einen einheitlichen Aufbau des Radführungsglieds 1 für verschiedene Fahrzeuge zu erstellen. Denkbar wäre, dass für jeden Fahrzeughersteller ein speziell abgestimmter Aufbau erstellt wird. Dagegen ist bei dem beschriebenen Radführungsglied vorgesehen, dass es in die herkömmliche Radaufhängung eines nicht lenkbaren Fahrzeugrades integrierbar ist und dabei an die beschränkten Bauraumverhältnisse verschieden ausgeführter Radaufhängungen anpassbar ist. Gleichzeitig ist eine kompakte Bauform realisiert, wie nachfolgend noch näher erläutert wird.

Wie es in Fig. 2 dargestellt ist, besteht das Radführungsglied 1 im Wesentlichen aus 3 Hauptgruppen: Dem fahrzeugaufbauseitigem Gelenk 5 bestehend aus Lagergehäuse 4 mit integriertem fahrzeugspezifischen Gummilager 3, der elektromechanischen Antriebseinheit 6 und dem fahrzeugspezifischen Spurstangenadapter 7, der aus der Schubstange 9 und dem radträgerseitigen Gelenk 11 gebildet ist.

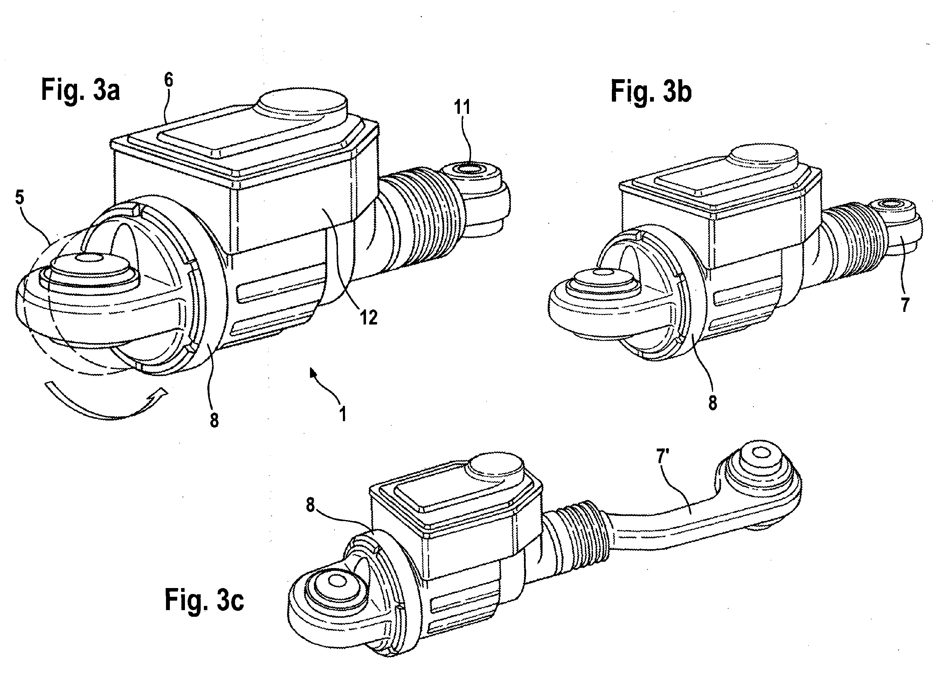

Das fahrzeugaufbauseitige Gelenk 5 wird mit Hilfe eines Schraubringes 8 mit der elektromechanischen Antriebseinheit 6 verbunden. Dabei wird das fahrzeugaufbauseitige Gelenk 5 bei der Endmontage in einer den Bauraumverhältnissen angepassten Winkelstellung in Bezug auf die Längsachse A der elektromechanischen Antriebseinheit 6 positioniert und mit Hilfe des Schraubrings 8 in dieser Stellung arretiert. Generell kann das fahrzeugaufbauseitige Gelenk 5 gegenüber der elektromechanischen Antriebseinheit 6 in beliebigen Winkelstellungen positioniert und mit dem Schraubring 8 in dieser Position fest gehalten werden. Dadurch ist das Radführungsglied 1 an die vorhandenen Bauraumverhältnisse adaptierbar. Durch die Verwendung des Gewinderinges 8 ergibt sich darüber hinaus eine sehr kompakte Bauform der beiden Gehäuseschnittstellen und die beiden Gehäusebauteile, Lagergehäuse 4 und Modulgehäuse 13, werden unter Belastung symmetrisch beansprucht, was eine Material- und Bauraumreduzierung zur Folge hat. Die freie Positionierung des fahrzeugaufbauseitigen Gelenks 5 um die Längsachse A ist auch in Fig. 3a schematisch dargestellt.

Wie Fig. 3b und c in Verbindung mit Fig. 2 zeigen ist das radträgerseitige Gelenk 11 austauschbar ausgebildet. Durch das Einsetzen eines Schubstangenadapters 7, 7' ist die geometrische Lage des radträgerseitigen Gelenks 11 veränderbar und das Radführungsglied 1 ist an die vorhandenen Bauraumverhältnisse anpassbar. Durch eine einheitliche Schnittstelle zwischen der Schubstange 9 und der elektromechanischen Antriebseinheit 6 wird die Verwendung eines Schubstangenadapters 7, 7' ermöglicht und es lassen sich fahrzeugspezifische Spurstangenlängen 10 einfach realisieren. Unter Verwendung der gleichen elektromechanischen Antriebseinheit 6 und unter Verwendung eines geeigneten fahrzeugaufbauseitigem Gelenk 5 sowie eines geeigneten Spurstangenadapters 7, 7' werden die verschiedensten Fahrzeug-Applikationen realisiert.

Durch die freie Drehbarkeit der elektromechanischen Antriebseinheit 6 in Bezug aus das fahrzeugaufbauseitige Lager 5 kann die Position des asymmetrischen Gehäuseteils, das mit dem Bezugszeichen 12 versehen ist, innerhalb des Hinterachsintegralträgers besser an die örtlich verschiedenen Gegebenheiten angepasst werden. Wie es in Fig. 2 dargestellt ist, nimmt das asymmetrische Gehäuseteil 12 eine Steuereinheit 20 und einen Verriegelungsmagneten 18 auf, deren Funktion später noch erläutert werden.

Wie der Fig. 2 weiter zu entnehmen ist, wird die elektromechanische Antriebseinheit 6 von einem Modulgehäuse 13 umschlossen, und besteht im Wesentlichen aus einem Elektromotor 14, einem, und einer Blockiereinrichtung 18, 24, 35 zur Unterdrückung der Längenverstellung des Radführungsgliedes 1. Der Elektromotor 14 ist koaxial zur Längsachse A der elektromechanischen Antriebseinheit angeordnet.

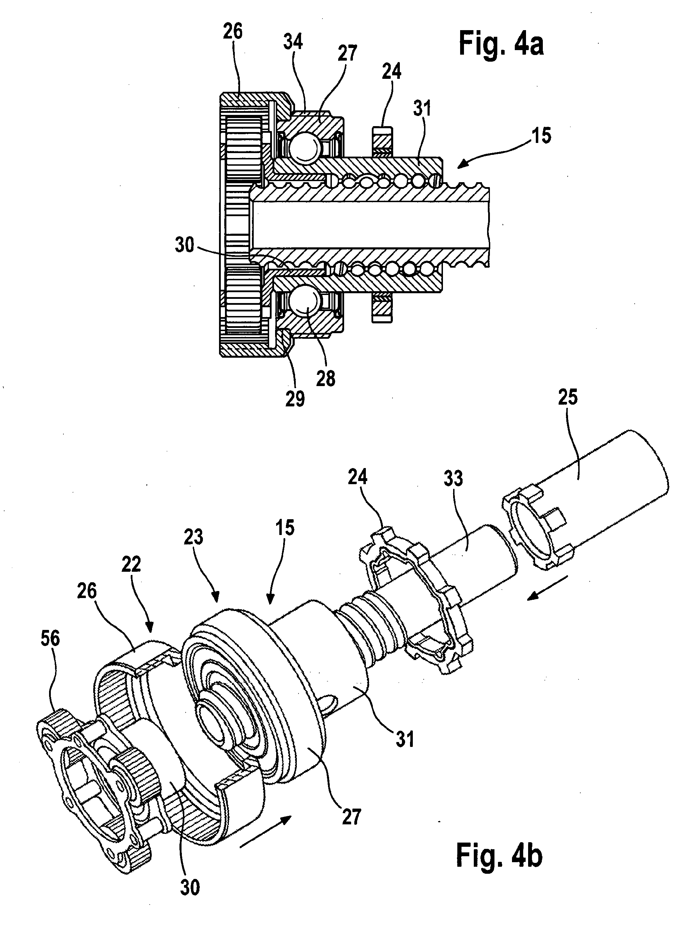

Das Getriebe 15 zur Umsetzung der Rotationsbewegung des Elektromotors 14 in eine Translationsbewegung der Schubstange 9 ist in Fig. 4a und b dargestellt und bildet eine vormontierbare Baugruppe. Das Getriebe 15 wird aus einem Planeten-Getriebe 22, einem Kugelgewindetrieb 23, einem Verriegelungsrad 24 und einer Verdrehsicherungshülse 25 gebildet.

Hierbei wird das Planetenhohlrad 26 des Planetenradgetriebes 22 form- und kraftschlüssig mit einem Außenring 27 des Axiallagers 28 des Kugelgewindetriebs 23 verpresst. Die Pressverbindungsstelle ist mit dem Bezugszeichen 29 bezeichnet. Alternativ zu der dargestellten Pressverbindung 29 kann das Planetenhohlrad 26 und der Außenring 27 einteilig gestaltet werden. Außerdem wird der Planetenträger 30 des Planetengetriebes 22 mit der Gewindemutter 31 des Kugelgewindetriebs 23 form- und kraftschlüssig verpresst. Alternativ kann auch hier der Planetenträger 30 und die Gewindemutter 31 einteilig gestaltet werden. Außerdem werden das Verriegelungsrad 24 mit der Gewindemutter 31 und die Verdrehsicherungshülse 25 mit der Spindel 33 des Kugelgewindetriebs 23 form- und kraftschlüssig miteinander verbunden. Als form- und kraftschlüssige Verbindungen eigenen sich hierbei partiell an den härteren Verbindungspartnern angebrachte Rändelungen.

An einem Außenring 27 des Kugelgewindetriebs 23 ist ein Einschraubgewinde 34 angebracht, wodurch sich das Getriebe 15 in das Modulgehäuse 13 der elektromechanischen Antriebseinheit 6 einschrauben lässt.

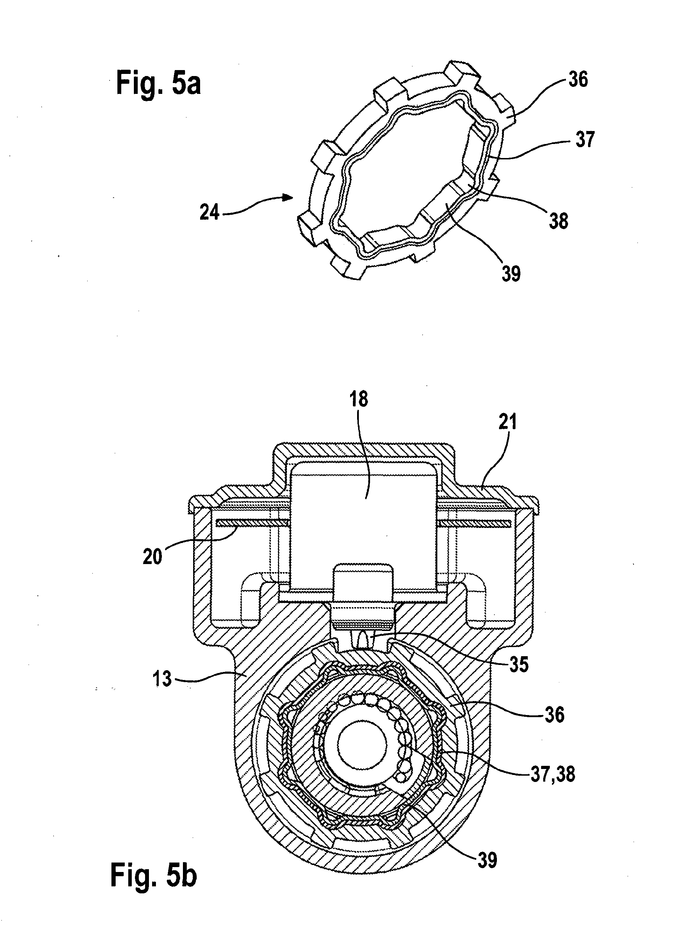

Anhand von Fig. 5a und b wird die Funktionsweise der Blockiereinrichtung 18, 24, 35 näher erläutert. In der Rückfallebene des Radführungsglieds 1 wird der Verriegelungsmagnet 18 stromlos geschaltet. Hierdurch rastet der federvorgespannte Magnetstößel 35 in eine Rastierscheibe 36 des Verrieglungsringes 24 mechanisch ein und verriegelt die Stellbewegung des Radführungsglieds 1. Da das mechanische Verriegeln des Radführungsglieds 1 auch bei einem Lenkvorgang der Hinterräder eingeleitet werden kann, wird der auf den Magnetstößel 35 einwirkende Impuls über eine durch ein Elastomer 37 entkoppelte äußere Rastierscheibe 36 gedämpft. Durch die Formgebung 38 des Innenringes 39 und der Rastierscheibe 36 wird ein Abscheren des Elastomers 37 unter Belastung vermieden.

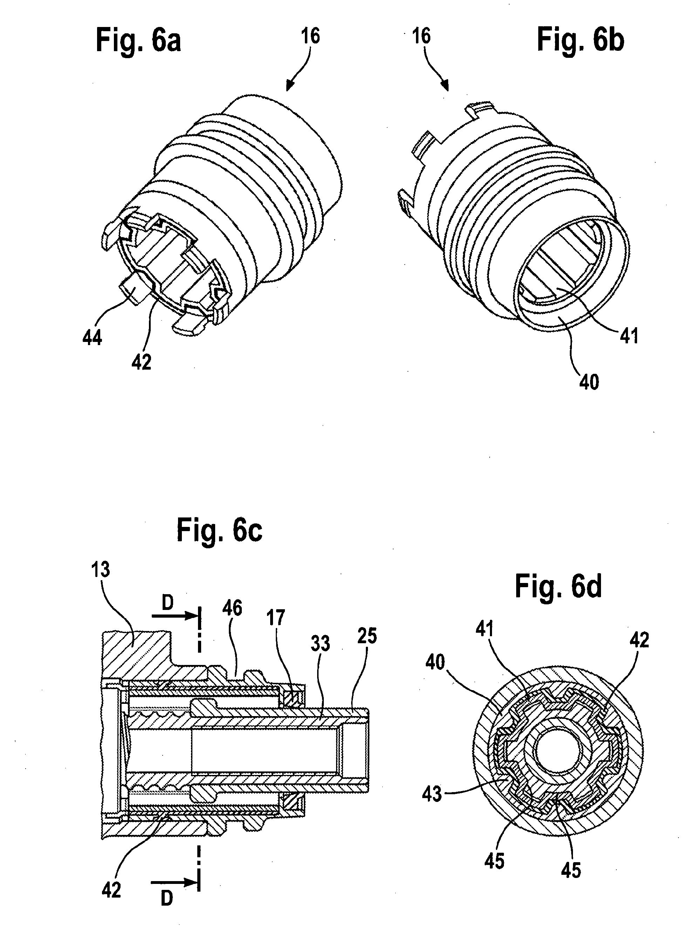

Anhand der Fig. 6a bis d wird eine Verdrehsicherung 16 des Schubstangenadapters 7,7' erläutert: Das Antriebsmoment des Elektromotors 14 wird mittels der Verdrehsicherung 16 am Modulgehäuse 13 abgestützt, wodurch die Linearbewegung 49 des Kugelgewindetriebs 33 und damit der Schubstange 9 entsteht. Die Verdrehsicherung 16 ist vorzugsweise ein aus Kunststoff gefertigtes aus mehreren Komponenten bestehendes Bauteil. Hierbei ist der Außenring 40 ist mit dem Innenring 41 über einen eingespritzten Elastomer-Einsatz 42 elastisch und formschlüssig durch die Profilierung 43 der beiden Bauteile miteinander verbunden. Vorzugsweise übernimmt der Elastomer-Einsatz 42 an dem Außenring 40 gleichzeitig eine Dichtfunktion 43 nach der axialen Montage der Verdrehsicherung 16 im Modulgehäuse 13. Die an dem Außenring 40 angespritzten Rastiernasen 44 dienen zur axialen Verrasterung der Verdrehsicherung 16 im Modulgehäuse 13.

Der Innenring 41 bildet innerhalb der Verdrehsicherung 16 die Funktion einer Gleitlagerungen 45 für die Spindel 33 und gleichzeitig eine radiale Lagerung mittels des aufgepressten Keilwellenprofils der Verdrehsicherungshülse 25. Durch die Elastomer-Einbettung des Innenringes 41 in den Außenring 40 gleicht sich die Flankenbelastung der Abstützungsmomente des Innenringes 41 harmonisch aus. Dadurch wird eine Geräuschentkoppelung erzielt.

Vorzugsweise ist in dem Außenring 40 der Verdrehsicherung 16 die Aufnahme des Abstreifers 17 und die Aufnahmenut 46 des Faltenbalges 19 integriert.

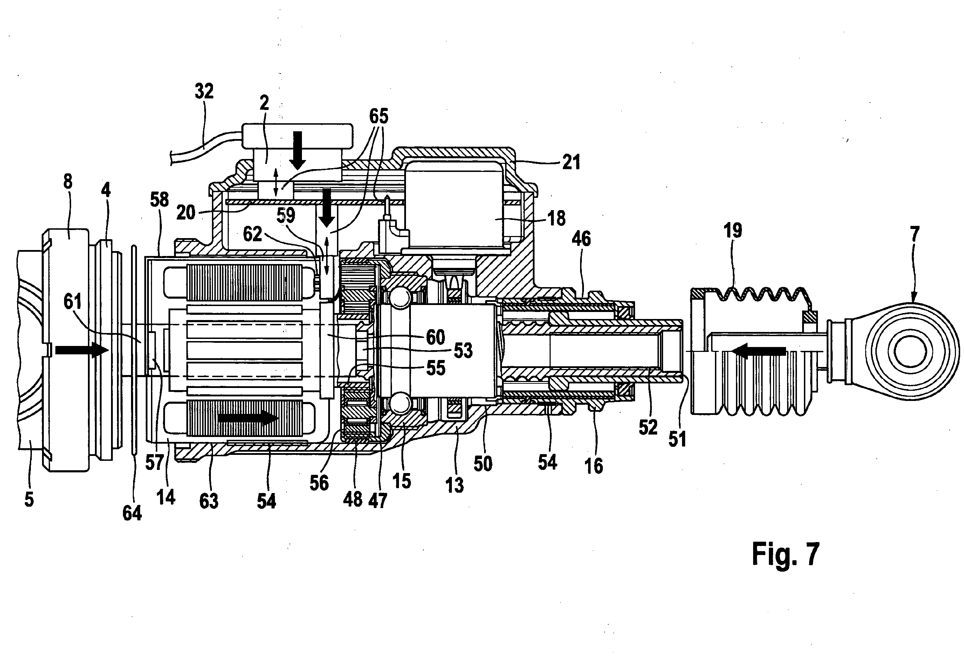

Nachfolgend wird nun mit Bezugnahme auf Fig. 7 der Montagevorgang der elektromechanischen Antriebseinheit 6 beschrieben.

Der Verriegelungsmagnet 18 wird in das Modulgehäuse 13 eingesetzt und mit diesem form- und kraftschlüssig am Bund des Verrieglungsmagneten 18 verstemmt.

Das Getriebe 15 zur Umsetzung der Rotationsbewegung des Elektromotors 14 in eine Translationsbewegung der Schubstange 9 wird in das Modulgehäuse 13 eingeschraubt. Hierbei ist das Hohlrad 26 des Planetengetriebes 22 durch, einen umlaufenden Spalt 47 akustisch und mechanisch vom Modulgehäuse 13 entkoppelt. Die Abrollgeräusche der Planetenräder 56 erden durch die akustische Entkopplung gedämpft. Zur Geräuschoptimierung kann optional ein Dämpfungsring 48 in das Hohlrad 26 integriert werden.

Anschließend erfolgt die axiale Montage der Verdrehsicherung 16 in das Modulgehäuse 13. Hierbei wird die Verdrehsicherung 16 rotatorisch in das Keilwellenprofil der Verdrehsicherungshülse 25 eingefädelt und auf Anschlag mit der Hinterdrehung 50 mittels der Rastnasen 43 axial verrastet Eine rotatorische Fixierung der Verdrehsicherung 16 zum Modulgehäuse 13 erfolgt mit Hilfe eines Klebeprozesses an der mit dem Bezugszeichen 54 versehen Stelle nach der Montage des entsprechenden Spurstangenadapters 7, 7'.

Der Faltenbalg 19 wird in die Aufnahmenut 46 der Verdrehsicherung 16 eingesetzt. Nun wird der Spurstangenadapter 7, 7' gegen den Anschlag 51 in die mit einem Innengewinde 52 ausgeführte Spindel 33 eingeschraubt. Das dabei auf die Spindel 33 wirkende Drehmoment wird von einem gegenüberliegend angebrachten Sechskant 53 abgestützt. Die Winkellage des Spurstangenadapters 7, 7' zur elektromechanischen Antriebseinheit 6 wird nun mittels der noch im Modulgehäuse 13 drehbaren Verdrehsicherung 16 ausgerichtet. Anschließend wird mittels einer Klebstoffinjektion an der Stelle 54 die Drehbewegung der Verdrehsicherung 16 form- und kraftschlüssig mit dem Modulgehäuse 13 fixiert.

Der Elektromotor 14 wird axial in das Modulgehäuse 13 eingeschoben, wobei das Sonnenrad 55 Bestandteil des Elektromotors 14 ist und sich bei dem Montageprozess in die Planetenräder 56 des Planetengetriebes 22 verzahnt. Der Elektromotor 14 verfügt über einen axial angebrachten Lagesensor 57 welcher über eine kunststoffintegrierte Leiterbahn 58 mit einem axial an der Vorderseite angebrachten Steckkontakt 59 elektrisch verbunden ist. Alternativ kann ein Ringsensor 60 an der Vorderseite zur Kommutierung des Elektromotors 14 angebracht werden. Unter Verwendung eines Ringsensors 60 ergibt sich die Möglichkeit der Integration einer Kompensationsfeder 61, die eine auf die Spurstange einwirkende Druckkraft bei stehendem und teilweise beladenem Fahrzeug kompensiert. Durch diese Maßnahme wird der Elektromotor 14 bei Geradeausfahrt entlastet, was die Energiebilanz verbessert. Des Weiteren beinhaltet der eben erwähnte Steckkontakt 59 die elektrische Schnittstelle zu den Elektromotorphasen 62. Der Steckkontakt 59 ragt mit seinem Durchmesser nicht über den Elektromotordurchmesser hinaus, wodurch eine sehr kompakte axiale Montage des Elektromotors 14 im Modulgehäuse 13 ermöglicht wird. Die Fixierung des Elektromotors 14 im Modulgehäuse 13 erfolgt formschlüssig über ein partiell am Elektromotorgehäuse angebrachte Rändelung 63. Nun erfolgt die Montage des fahrzeugaufbauseitigen Gelenks 5 mit dem Schraubring 8. Die Abdichtung der beiden Gehäuseteile 4, 13 erfolgt über einen O-Ring 64. Anschließend wird die Montage der Steuereinheit 20 vorgenommen. Bei der axialen Montage werden über elektrische Schnittstellen 65, die Bestandteil der Platine der Steuereinheit 20 sind, der Elektromotor 14 und der Verriegelungsmagnet 18 mit der Steuereinheit 20 kontaktiert. Die Endmontage des Radführungsgliedes 1 erfolgt mit der Montage des Deckels 21. Der Deckel 21 beinhaltet eine elektrische Außen-Schnittstelle 2 mit einem Kabelabgang 32 zu einem Bremsen-Steuergerät oder zum Fahrzeugbus CAN. Die elektrische Außen-Schnittstelle 2 ist für verschieden Fahrzeugmodelle individuell konfigurierbar. Bei der Montage kontaktiert diese Außen-Schnittstelle 2 die Schnittstelle 65 der Steuereinheit 20. Alternativ kann die Steuereinheit 20 in den Deckel 21 integriert werden, wodurch eine elektrische Schnittstelle 65 zwischen der Platine der Steuereinheit 20 und der elektrischen Außen-Schnittstelle 2 entfallen kann. Bei einer Ausbildung des Deckels 21 aus Aluminium mit nicht dargestellten Kühlrippen kann der Deckel 21 als Kühlkörper genutzt werden.

### Bezugszeichenliste

- 1.: Radführungsglied
- 2.: elektrische Außen-Schnittstelle
- 3.: Gummilager
- 4.: Lagergehäuse
- 5.: fahrzeugaufbauseitiges Gelenk
- 6.: elektromechanische Antriebseinheit
- 7.: Spurstangenadapter
- 8.: Schraubring
- 9.: Schubstange
- 10.: Spurstangenlänge
- 11.: radträgerseitiges Gelenk
- 12.: asymmetrisches Gehäuseteil
- 13.: Modulgehäuse
- 14.: Elektromotor
- 15.: Getriebe
- 16.: Verdrehsicherung
- 17.: Abstreifer
- 18.: Verrieglungsmagnet
- 19.: Faltenbalg
- 20.: Steuereinheit
- 21.: Deckel
- 22.: Planetengetriebe
- 23.: Kugelgewindetrieb
- 24.: Verriegelungsring
- 25.: Verdrehsicherungshülse
- 26.: Planetenhohlrad
- 27.: Außenring
- 28.: Axiallager
- 29.: Pressverbindung
- 30.: Planetenträger
- 31.: Gewindemutter
- 32.: Kabelabgang
- 33.: Spindel
- 34.: Einschraubgewinde
- 35.: Magnetstößel
- 36.: Rastierscheibe
- 37.: Elastomer
- 38.: Formgebung
- 39.: Innenring
- 40.: Außenring
- 41.: Innenring
- 42.: Elastomer-Einsatz
- 43.: Profil
- 44.: Rastiernasen
- 45.: Gleitlagerung
- 46.: Aufnahmenut
- 47.: Spalt
- 48.: Dämpfungsring
- 49.: Linearbewegung
- 50.: Hinterdrehung
- 51.: Anschlag
- 52.: Innengewinde
- 53.: Sechskant
- 54.: Stelle zur Klebstoffinjektion
- 55.: Sonnenrad
- 56.: Planetenräder
- 57.: Lagesensor
- 58.: Leiterbahn
- 59.: Steckkontakt
- 60.: Ringsensor
- 61.: Kompensationsfeder
- 62.: Elektromotorphasen
- 63.: Rändelung
- 64.: O-Ring
- 65.: elektrische Schnittstelle
- 66.: Radträger
- 67.: Schwenklager
- 68.: Schwenklager
- 69.: Spurstange
- 70.: Querlenker
- 71.: Hilfsrahmen
- 72.: Befestigungspunkt
- 73.:
- 74.: Radführungslenker
- 75.: Federbein
- 76.: Radlagerung
- 77.: a, b Lagerseitenstege
- 78.:
- 79.: Radantriebswelle
- 80.: Differentialgetriebe
- 81.: Flansch

## Patentansprüche

1. Lenkvorrichtung zum Einstellen eines Radeinschlagswinkels eines Rades eines Kraftfahrzeugs, insbesondere eines Hinterrades, umfassend wenigstens ein Radführungsglied (1), über das ein Radträger (66) des Rades mit einem Fahrzeugaufbau verbunden ist, wobei der Radträger (66) um eine im Wesentlichen parallel zur Radebene verlaufende Drehachse schwenkbar ist und das Radführungsglied (1) beabstandet von der Drehachse an dem Radträger (66) angelenkt und mittels einer elektromechanischen Antriebseinheit (6) in seiner Länge verstellbar ist, wobei die elektromechanische Antriebseinheit (6) einerseits über eine Schubstange (9) mit einem radträgerseitigen Gelenk (11) zur Bildung eines Schwenklagers (67) verbunden ist, über das eine Verbindung zum Radträger (66) realisiert wird und andererseits mit einem fahrzeugaufbauseitigem Gelenk (5) zur Bildung eines weiteren Schwenklagers (68) verbunden ist, über das eine Verbindung zum Fahrzeugaufbau realisiert wird, **dadurch gekennzeichnet, dass** das fahrzeugaufbauseitige Gelenk (5) gegenüber der Längsachse (A) der elektromechanischen Antriebseinheit (6) in beliebigen Winkelstellungen positionierbar und mittels eines Schraubrings (8) in dieser Position feststellbar ist, sodass das Radführungsglied (1) an die vorhandenen Bauraumverhältnisse adaptierbar ist.

2. Lenkvorrichtung nach Anspruch 1, **dadurch gekennzeichnet, dass** das radträgerseitigen Gelenk (11) austauschbar ausgebildet ist und dass die geometrische Lage des radträgerseitigen Gelenks (11) durch das Einsetzen eines Schubstangenadapters (7, 7') veränderbar ist, um das Radführungsglied (1) an die vorhandenen Bauraumverhältnisse anzupassen.

3. Lenkvorrichtung nach einem der Ansprüche 1 oder 2, **dadurch gekennzeichnet, dass** die elektromechanische Antriebseinheit (6) einen Elektromotor (14) aufweist, der koaxial zur Längsachse (A) der elektromechanischen Antriebseinheit (6) angeordnet ist.

4. Lenkvorrichtung nach Anspruch 3, **dadurch gekennzeichnet, dass** der Elektromotor (14) unter Zwischenschaltung eines Planetengetriebes (22) einen Kugelgewindetrieb (23) betätigt, der die Rotationsbewegung des Elektromotors (14) in eine Translationsbewegung einer Schubstange (9) umsetzt und eine Verstellung der Länge des Radführungsglieds (1) bewirkt.

5. Lenkvorrichtung nach Anspruch 2 und 4, **dadurch gekennzeichnet, dass** der Schubstangenadapter (7, 7') mittels eines Gewindes (52) in die Gewindespindel (33) des Kugelgewindetriebs (23) eindrehbar ist.

6. Lenkvorrichtung nach Anspruch 4, **dadurch gekennzeichnet, dass** weder das Planetengetriebe (22) noch der Kugelgewindetrieb (23) selbsthemmend ausgebildet sind, wobei eine Blockiereinrichtung (18, 24, 35) vorgesehen ist, die einen von einem Verriegelungsmagnet (18) betätigten Magnetstößel (35) mit einem Verriegelungsring (24) in Eingriff bringt, der mit dem Kugelgewindetrieb (23) verbunden ist, sodass eine Längenverstellung des Radführungsglieds (1) unterbunden wird.

7. Lenkvorrichtung nach einem der Ansprüche 3 bis 6, **dadurch gekennzeichnet, dass** eine Steuereinheit (20) benachbart zum Elektromotor (14) im Gehäuse (13) der elektromechanischen Antriebseinheit (6) angeordnet ist.

8. Lenkvorrichtung nach einem der Ansprüche 3 bis 7, **dadurch gekennzeichnet, dass** der Elektromotor (14) mindestens einen Sensor (57, 60) zur Ermittlung der Rotorlage aufweist.

9. Lenkvorrichtung nach Anspruch 8, **dadurch gekennzeichnet, dass** der Sensor als axial am Elektromotor (14) angebrachter Lagesensor (57) oder als mit dem Rotor des Elektromotors (14) verbundener Ringsensor (60) ausgebildet ist.

10. Lenkvorrichtung nach einem der vorhergehenden Ansprüche, **dadurch gekennzeichnet, dass** es sich bei dem Radführungsglied (1) um eine Spurstange (69) und/oder einen Querlenker (70) einer Einzelradaufhängung handelt.

11. Lenkvorrichtung nach einem der vorhergehenden Ansprüche, **dadurch gekennzeichnet, dass** die elektromechanische Antriebseinheit (6), das radträgerseitige Gelenk (11) und das fahrzeugaufbauseitige Gelenk (5) als selbstständig handhabbare Baugruppen ausgeführt sind.

## Claims

1. Steering device for adjusting a wheel turning angle of a wheel of a motor vehicle, in particular of a rear wheel, comprising at least one wheel guide member (1) via which a wheel carrier (66) of the wheel is connected to a vehicle body, the wheel carrier (66) being swivellable about an axis of rotation disposed substantially parallel to the wheel plane and the wheel guide member (1) being articulated to the wheel carrier (66) at a distance from the axis of rotation and being adjustable in length by means of an electromechanical drive unit (6), the electromechanical drive unit (6) being connected on the one hand via a push rod (9) to a joint (11) at the wheel carrier end in order to form a swivel bearing (67) by means of which a connection to the wheel carrier (66) is established, and on the other hand to a joint (5) at the vehicle body end in order to form a further swivel bearing (68) by means of which a connection to the vehicle body is established, **characterised in that** the joint (5) at the vehicle body end can be positioned in any desired angular position with respect to the longitudinal axis (A) of the electromechanical drive unit (6) and can be fixed in this position by means of a threaded ring (8), so that the wheel guide member (1) can be adapted to the existing installation space conditions.

2. Steering device according to Claim 1, **characterised in that** the joint (11) at the wheel carrier end is configured to be exchangeable and **in that** the geometrical position of the joint (11) at the wheel carrier end can be varied by inserting a push rod adapter (7, 7') in order to adapt the wheel guide member (1) to the existing installation space conditions.

3. Steering device according to any one of Claims 1 or 2, **characterised in that** the electromechanical drive unit (6) includes an electric motor (14) which is arranged coaxially with the longitudinal axis (A) of the electromechanical drive unit (6).

4. Steering device according to Claim 3, **characterised in that** the electric motor (14) actuates via an interposed epicyclic gear (22) a ball screw (23) which converts the rotary motion of the electric motor (14) into a translational motion of a push rod (9) and causes an adjustment of the length of the wheel guide member (1).

5. Steering device according to Claims 2 and 4, **characterised in that** the push rod adapter (7, 7') can be inserted by means of a thread (52) into the screw spindle (33) of the ball screw (23).

6. Steering device according to Claim 4, **characterised in that** neither the epicyclic gear (22) nor the ball screw (23) are configured to be self-locking, a blocking device (18, 24, 35) being provided which brings a magnet plunger (35) actuated by a locking magnet (18) into engagement with a locking ring (24) which is connected to the ball screw (23), so that adjustment of the length of the wheel guide member (1) is prevented.

7. Steering device according to any one of Claims 3 to 6, **characterised in that** a control unit (20) is arranged adjacent to the electric motor (14) in the housing (13) of the electromechanical drive unit (6).

8. Steering device according to any one of Claims 3 to 7, **characterised in that** the electric motor (14) has at least one sensor (57, 60) for determining the position of the rotor.

9. Steering device according to Claim 8, **characterised in that** the sensor is in the form of a position sensor (57) mounted axially on the electric motor (14) or of a ring sensor (60) connected to the rotor of the electric motor (14).

10. Steering device according to any one of the preceding claims, **characterised in that** the wheel guide member (1) is a track rod (69) and/or a track control arm (70) of an independent wheel suspension.

11. Steering device according to any one of the preceding claims, **characterised in that** the electromechanical drive unit (6), the joint (11) at the wheel carrier end and the joint (5) at the vehicle body end are implemented as assemblies which can be handled independently.

## Revendications

1. Dispositif de direction pour l'ajustement d'un angle de braquage de roue d'une roue d'un véhicule automobile, en particulier d'une roue arrière, comprenant au moins un organe de guidage de roue (1), par le biais duquel un support de roue (66) de la roue est connecté à une caisse du véhicule, le support de roue (66) pouvant pivoter autour d'un axe de rotation s'étendant essentiellement parallèlement au plan de la roue et l'organe de guidage de roue (1) étant articulé à distance de l'axe de rotation au support de roue (66) et pouvant être réglé en longueur au moyen d'une unité d'entraînement électromécanique (6), l'unité d'entraînement électromécanique (6) étant connectée d'une part par le biais d'une tige poussoir (9) à une articulation du côté du support de roue (11) pour former un palier pivotant (67), par le biais duquel est réalisée une connexion au support de roue (66), et d'autre part étant connectée à une articulation (5) du côté de la caisse du véhicule pour former un autre palier pivotant (68), par le biais duquel est réalisée une connexion à la caisse du véhicule, **caractérisé en ce que** l'articulation (5) du côté de la caisse du véhicule peut être positionnée par rapport à l'axe longitudinal (A) de l'unité d'entraînement électromécanique (6) dans des positions angulaires quelconques et peut être fixée au moyen d'une bague filetée (8) dans cette position, de telle sorte que l'organe de guidage de roue (1) puisse être adapté aux conditions de place de construction existantes.

2. Dispositif de direction selon la revendication 1, **caractérisé en ce que** l'articulation (11) du côté du support de roue est réalisée de manière remplaçable et **en ce que** la position géométrique de l'articulation du côté du support de roue (11) peut être modifiée par l'insertion d'un adaptateur de tige poussoir (7, 7') afin d'adapter l'organe de guidage de roue (1) aux conditions de place de construction existantes.

3. Dispositif de direction selon l'une quelconque des revendications 1 ou 2, **caractérisé en ce que** l'unité d'entraînement électromécanique (6) présente un moteur électrique (14) qui est disposé coaxialement par rapport à l'axe longitudinal (A) de l'unité d'entraînement électromécanique (6).

4. Dispositif de direction selon la revendication 3, **caractérisé en ce que** le moteur électrique (14) actionne une vis d'entraînement à bille (23) par interposition d'un engrenage planétaire (22), laquelle vis d'entraînement à billes convertit le mouvement de rotation du moteur électrique (14) en un mouvement de translation d'une tige poussoir (9) et provoque un réglage de la longueur de l'organe de guidage de roue (1).

5. Dispositif de direction selon les revendications 2 et 4, **caractérisé en ce que** l'adaptateur de tige poussoir (7, 7') peut être vissé au moyen d'un filetage (52) dans la broche filetée (33) de la vis d'entraînement à bille (23).

6. Dispositif de direction selon la revendication 4, **caractérisé en ce que** ni l'engrenage planétaire (22) ni la vis d'entraînement à billes (23) ne sont réalisés de manière autobloquante, un dispositif de blocage (18, 24, 35) étant prévu, lequel met en prise un poussoir magnétique (35) actionné par un aimant de verrouillage (18) avec une bague de verrouillage (24), laquelle est connectée à la vis d'entraînement à billes (23), de telle sorte qu'un réglage de la longueur de l'organe de guidage de roue (1) soit supprimé.

7. Dispositif de direction selon l'une quelconque des revendications 3 à 6, **caractérisé en ce qu'**une unité de commande (20) est disposée à proximité du moteur électrique (14) dans le boîtier (13) de l'unité d'entraînement électromécanique (6).

8. Dispositif de direction selon l'une quelconque des revendications 3 à 7, **caractérisé en ce que** le moteur électrique (14) présente au moins un capteur (57, 60) pour déterminer la position du rotor.

9. Dispositif de direction selon la revendication 8, **caractérisé en ce que** le capteur est réalisé sous forme de capteur de position (57) monté axialement sur le moteur électrique (14) ou sous forme de capteur annulaire (60) connecté au rotor du moteur électrique (14).

10. Dispositif de direction selon l'une quelconque des revendications précédentes, **caractérisé en ce que** l'organe de guidage de roue (1) est une barre d'accouplement (69) et/ou un bras oscillant transversal (70) d'une suspension de roue individuelle.

11. Dispositif de direction selon l'une quelconque des revendications précédentes, **caractérisé en ce que** l'unité d'entraînement électromécanique (6), l'articulation (11) du côté du support de roue et l'articulation (5) du côté de la caisse du véhicule sont réalisées sous forme de modules pouvant être manipulés de manière autonome.
